# EUROPEAN PATENT APPLICATION

(11) **EP 3 705 863 A1**
(43) Date of publication of application: **09.09.2020**
(21) Application number: 19211890.9
(22) Date of filing: 27.11.2019
(51) Int. Cl.: G01L 3/10

(54) **MAGNETOSTRICTION TYPE TORQUE DETECTION SENSOR**

(30) Priority: 06.03.2019 JP 2019040406; 27.09.2019 JP 2019176568
(71) Applicant: Shinano Kenshi Kabushiki Kaisha, Nagano 386-0498 (JP)
(72) Inventor: FURUKAWA, Akihide, Ueda-shi, Nagano 386-0498 (JP)
(74) Representative: Mewburn Ellis LLP

(57) **Abstract**

There is provided a magnetostriction type torque detection sensor capable of detecting a torque which is generated at the entire circumference of a side surface of a detected object, in a uniform manner and with an improved detection sensitivity, and also capable of being reduced in size of the sensor in the axial direction of the detected object.

A plurality of cores (3) having at least three or more leg portions (3b) connected to each other by a bridging portion (3a) located at an outer circumferential surface side of an insulating tubular body (2) is arrayed while being inclined at a predetermined angle to the axis (O) of a detected object (S) and is attached in such a manner that a plurality of leg portion end surfaces (3b1) face the detected object (S) via an inner circumferential surface of the insulating tubular body (2).

## Description

### Technical Field

The present invention relates to a magnetostriction type torque detection sensor.

### Background Art

A method of detecting a torque acting on a detected object such as a rotation shaft in a non-contact manner includes using a torque detection device of the magnetostriction type. In the torque detection device, a pair of coils is wound around the detected object in a non-contact manner, and a pair of cores of the claw-pole type surrounding the inner and outer circumferences of them is concentrically provided without contacting the detected object. Each core is attached in such a manner that a pair of ring portions provided with pole teeth on the inner circumferential side at both ends of a tubular portion faces the detected object with the pole teeth arranged in a mutually meshing manner. The cores, each of which forms a magnetic path in conjunction with the detected object, are arranged symmetrically with respect to a line segment perpendicular to the axis of the detected object. A magnetic flux which is generated by energization of each coil causes a magnetic path to be formed by the core and the detected object.

A case where a torque has acted on a detected object is described. Depending on directions of a torque acting on the detected object, a compressive stress acts in a direction of+45° relative to the axis of the detected object and a tensile stress acts in a direction of -45° relative thereto, or a tensile stress acts in a direction of+45° relative thereto and a compressive stress acts in a direction of -45° relative thereto. Since a magnetic flux passes through the detected object in a direction inclined relative to the axis thereof, the magnetic flux passes therethrough in such a way as to travel along the direction of a tensile stress or compressive stress acting on the detected object. The relative magnetic permeability of the detected object varying causes a change in inductance of a pair of coils. Converting such a change in inductance of a pair of coils into a torque enables detecting a torque acting on the detected object. Moreover, making clearances between teeth and teeth, which mesh with each other along the vertical direction in the claw-pole type structure, different from each other enables setting the direction of a magnetic flux passing through the detected object to an intended direction (see PTL 1: Japanese Patent No. 5,683,001).

### Summary of Invention

### Technical Problem

However, in the above-mentioned detection device disclosed in PTL 1, a magnetic flux having a direction different from the magnetic flux having an intended direction would also be formed albeit slightly, so that the magnetic fluxes may cancel out each other, thus reducing the detection sensitivity.

Moreover, there is a need to improve the detection sensitivity for a torque by increasing the surface area of the core facing the detected object or the volume of the core serving as a magnetic flux path and thus further increasing magnetic fluxes having an intended direction themselves.

Additionally, there is also a need to reduce the size of the sensor along the axial direction of the detected object.

### Solution to Problem

In response to the above issue, one or more aspects of the present invention are directed to a magnetostriction type torque detection sensor capable of detecting a torque which is generated at the entire circumference of a side surface of a detected object, in a uniform manner and with an improved detection sensitivity, and also capable of being reduced in size of the sensor in the axial direction of the detected object.

In view of the above, the following embodiments are described below.

A magnetostriction type torque detection sensor includes an insulating tubular body concentrically attached in such a way as to cover an outer circumference of a detected object, a plurality of cores having at least three or more leg portions connected to each other by a bridging portion located at an outer circumferential surface side of the insulating tubular body, and a detection coil wound around any of the leg portions of each of the plurality of cores without adjoining each other, wherein the plurality of cores is arrayed while being inclined at a predetermined angle to an axis of the detected object and is attached in such a manner that end surfaces of the leg portions face the detected object via an inner circumferential surface of the insulating tubular body.

According to the above magnetostriction type torque detection sensor, since a plurality of cores having at least three or more leg portions connected to each other by a bridging portion located at an outer circumferential surface side of an insulating tubular body is arrayed while being inclined at a predetermined angle to an axis of a detected object and is attached in such a manner that end surfaces of the leg portions face the detected object via an inner circumferential surface of the insulating tubular body, the surface area of each core facing the detected object can be increased.

Moreover, since three or more leg portions are connected to each other by a bridging portion located at an outer circumferential surface side of an insulating tubular body, the volume of each core expands toward outward in a radial direction thereof, so that a wide magnetic flux path can be attained.

Since the above-mentioned configuration enables increasing the absolute amount of a magnetic flux which is effective for detection of a torque, the detection sensitivity for a torque acting on a detected object is improved.

A plurality of detection coils each corresponding to the above detection coil can be respectively provided at a plurality of leg portions, and directions of currents which flow through the respective detection coils can be the same.

In this case, energizing the plurality of detection coils in the same direction causes magnetic fluxes passing through the respective leg portions around which the detection coils are wound to travel in the same direction with respect to the detected object. Similarly, such energizing causes magnetic fluxes passing through the respective leg portions around which no detection coils are wound to also travel in the same direction with respect to the detected object. However, the respective directions of magnetic fluxes passing through the respective leg portions around which the detection coils are wound and magnetic fluxes passing through the respective leg portions around which no detection coils are wound become opposite to each other with respect to the detected object. With this configuration, magnetic paths which pass through the detected object and return to the cores travel in a unified direction without cancelling each other, and, therefore, the amount of magnetic flux which contributes to detection increases, so that the detection sensitivity for a torque is improved.

The number of leg portions mentioned above is an odd number or even number of 3 or more, and detection coils can be wound around every other leg portion out of a plurality of leg portions connected to each other by the bridging portion. For example, in a case where the number of leg portions is an odd number of 3 or more, detection coils can be arranged at every other leg portion except for two-side leg portions connected to the bridging portion, and a magnetic circuit which leads between a leg portion around which a detection coil is wound and leg portions at both sides of the leg portion in such a manner that a dead space caused by a detection coil protruding outward occurs only to a small degree is formed, so that the amount of magnetic flux passing through end surfaces of the leg portions can be increased.

Furthermore, in a case where the number of leg portions is an even number of 3 or more, if detection coils are wound around every other leg portion out of a plurality of leg portions, since a detection coil is wound around a leg portion connected to any end portion of the bridging portion, the detection coil protrudes outward, but the amount of magnetic flux passing through end surfaces of the leg portions of the core can be increased.

It is desirable that the plurality of cores be attached at regular intervals in the axial direction or rotational direction of the insulating tubular body in such a manner that a magnetic path which is formed at the plurality of cores and the detected object is at an inclination angle of any one of ±45° to the axis of the detected object.

With this, in a case where a torque is applied to the axis of the detected object, a compressive stress acts in a direction of+45° and a tensile stress acts in a direction of -45°, or a tensile stress acts in a direction of+45° and a compressive stress acts in a direction of-45° relative thereto. In that case, since, as mentioned above, the plurality of cores is attached to the insulating tubular body in such a manner that the formed magnetic path is at an inclination angle of any one of ±45° to the axis of the detected object, a change in magnetic permeability occurring in the detected object can be detected to a maximum extent by performing conversion from the amount of change in inductance of the detection coils to a torque.

A plurality of cores having inclination angles of ±45° to the axis of the detected object can be attached to a single insulating tubular body at regular intervals in a circumferential direction.

In this case, although it would be normally required that a core and a detection coil used to detect a compressive stress in a direction of+45° relative to the axial direction of the detected object be arranged at one insulating tubular body and a core and a detection coil used to detect a tensile stress in a direction of -45° relative thereto be arranged at the other insulating tubular body in a separate manner, arranging these cores and detection coils at regular intervals in a circumferential direction around a single insulating tubular body enables reducing the size of a magnetostriction type torque detection sensor in the axial direction thereof.

### Advantageous Effects of Invention

A magnetostriction type torque detection sensor capable of detecting a torque which is generated at the entire circumference of a side surface of a detected object, in a uniform manner and with an improved detection sensitivity, and also capable of being reduced in size of the sensor in the axial direction of the detected object can be provided.

### Brief Description of Drawings

Fig. 1 is a perspective view of a magnetostriction type torque detection sensor mounted on a detected object.
Fig. 2 is a perspective view of the magnetostriction type torque detection sensor illustrated in Fig. 1.
Fig. 3 is a sectional view taken along an axial direction of the magnetostriction type torque detection sensor illustrated in Fig. 2.
Fig. 4 is a front view of a core with a detection coil mounted thereon.
Fig. 5 is a perspective view of the core illustrated in Fig. 4.
Fig. 6 is a front-side perspective view of the core illustrated in Fig. 5.
Fig. 7 is a back-side perspective view of the core illustrated in Fig. 6.
Fig. 8 is a perspective view of a core according to another example.
Figs. 9A, 9B, 9C, 9D, and 9E are schematic diagrams each illustrating a locational relationship between the shape of a core and a detection coil according to another example.
Fig. 10 is a schematic explanatory diagram of a torque testing apparatus for an evaluation sample.
Figs. 11A and 11B are graph charts each illustrating a relationship between a torque applied to an evaluation sample and a sensor output voltage.

### Description of Embodiments

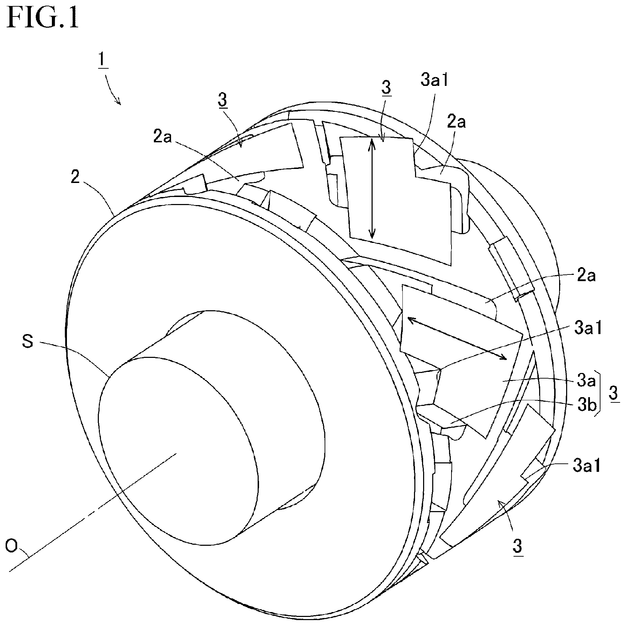

Hereinafter, a magnetostriction type torque detection sensor according to an embodiment of the present invention will be described with reference to the accompanying drawings. First, an outline configuration of the magnetostriction type torque detection sensor is described with reference to Fig. 1 to Fig. 7.

It is desirable that, for example, a detected object S be made from a material that is high in inverse magnetostriction effect. For example, the material that is high in inverse magnetostrictive effect includes permendur (FeCoV), Alfer (Fe-Al), permalloy (Fe-Nix), and spheroidal graphite cast iron (JIS FCD70). Furthermore, the inverse magnetostrictive effect is a phenomenon in which, when a stress is externally applied to a magnetic material, the magnetic property thereof changes. Moreover, if the detected object S is previously subjected to magnetic annealing as needed, a torque acting on the detected object S can be appropriately detected, although details thereof are described below. Moreover, even if a core material serving as a base of the detected object S is a non-magnetic material, performing coating with a metallic magnetic material by, for example, thermal spraying or performing press fitting of a magnetic cylinder as a shaft enables torque detection. Furthermore, the detected object S illustrated in Fig. 1 as an example is column-shaped, but is not limited to this. As long as the outer shape of the detected object S is column-shaped, the internal structure thereof is not considered. For example, a columnar shape in which the inner diameter is constant with respect to the axial direction or a columnar shape in which the inner diameter is varied with respect to positions in the axial direction can also be employed. Moreover, the detected object S can be the one scheduled to be rotated or can be the one not scheduled to be rotated.

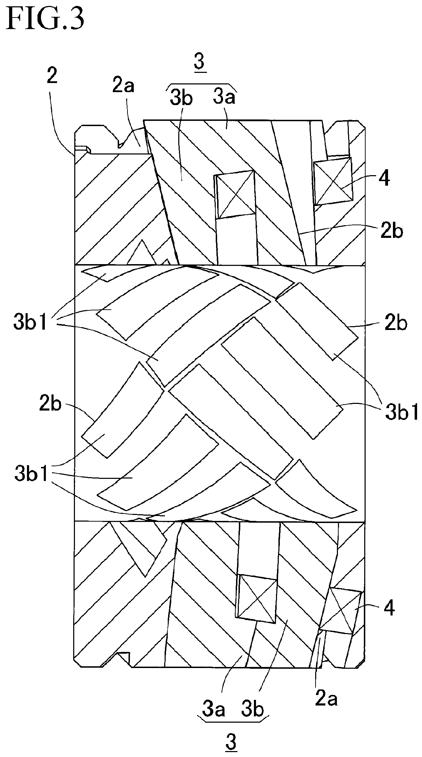

As illustrated in Fig. 1, a magnetostriction type torque detection sensor 1 is concentrically attached while covering the outer circumference of the detected object S. An insulating tubular body 2 (insulator), which is made from resin, is concentrically attached while covering the outer circumference of the detected object S. A mounting portion 2a for a core 3 is provided at a plurality of places on the circumferential surface of the insulating tubular body 2. The mounting portion 2a is provided in a recessed manner on the circumferential surface of the insulating tubular body 2, and the core 3, which is in the shape of letter U or in the shape of a string of letters U as described below, is mounted on the mounting portion 2a. Moreover, as illustrated in Fig. 3, the mounting portion 2a is provided with insertion holes 2b (through-holes), into which a plurality of leg portions (as an example, three leg portions 3b connected to a bridging portion 3a of each core 3) provided at the core 3 is inserted inward in the radial direction. Each core 3 can be any one of a stacked core obtained by stacking and pressing magnetic steel sheets and a molded core obtained by ramming down metallic magnetic material powders with pressing.

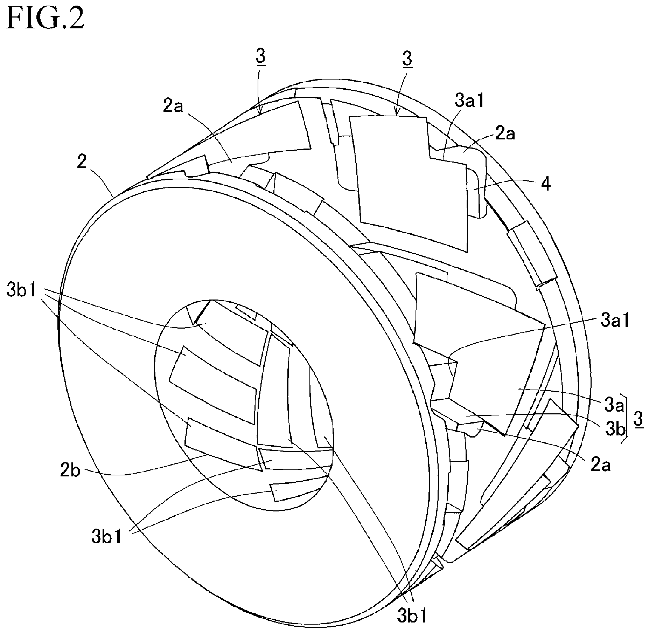

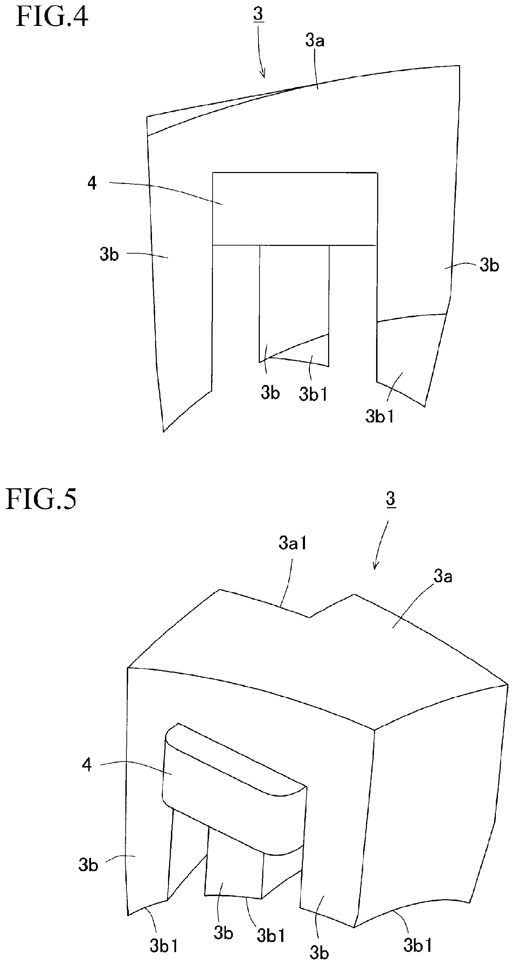

As illustrated in Fig. 4 and Fig. 5, the core 3 includes a bridging portion 3a, which is provided to extend in a circumferential direction to configure an outer circumferential surface of the insulating tubular body 2, and at least three or more leg portions 3b, which are provided to extend from the bridging portion 3a toward the inner circumferential surface side of the insulating tubular body 2. In the present embodiment, a case where the core 3 includes three leg portions 3b is described as an example. A detection coil 4 is wound around a leg portions 3b located at the central portion out of three leg portions 3b connected to the bridging portion 3a. The detection coil 4 is circularly wound around a leg portion 3b located at the central portion between two-side leg portions 3b. As illustrated in Fig. 2 and Fig. 3, a plurality of cores 3 is arrayed while a plurality of leg portions 3b is inclined at predetermined angles (±45°) to the axis of the detected object S, and is attached in such a manner that end surfaces 3b1 of the leg portions 3b face the circumferential surface of the detected object S via an inner circumferential surface of the insulating tubular body 2. Furthermore, the predetermined angles are not limited to ±45°, but can be applied in the range of 0° to 90° as long as the range is configured to attain an advantageous effect similar to that of the present invention. In a case where the predetermined angles are other than ±45°, processing for performing conversion of a magnetic flux obtained at that time and extracting ±45° components therefrom can be performed.

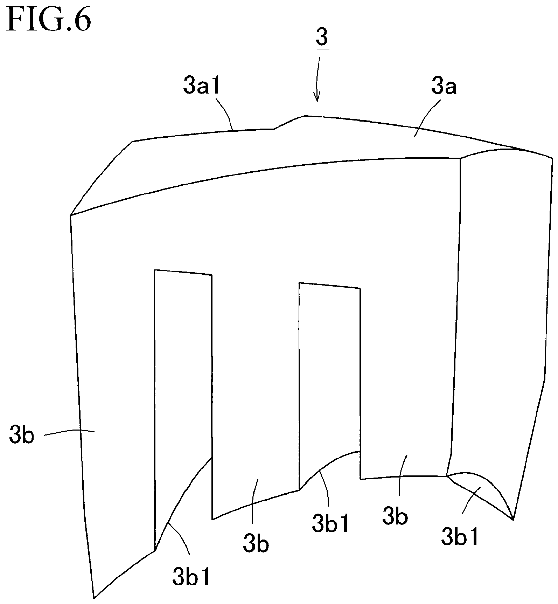

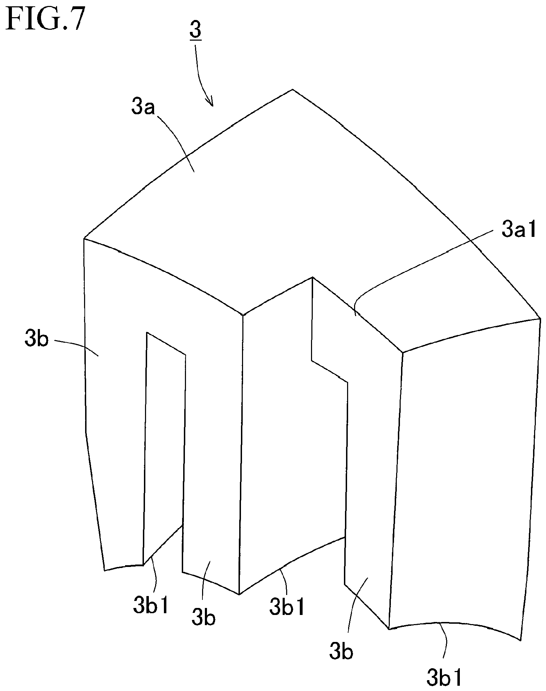

As illustrated in Fig. 6 and Fig. 7, the bridging portion 3a of the core 3 is formed in a curved surface shape to configure an outer circumferential surface of the insulating tubular body 2, and the end surface 3b1 of each leg portion 3b is also formed in a curved surface shape along the inner circumferential surface of the insulating tubular body 2 to face the circumferential surface of the detected object S.

Moreover, the core 3 has a cutout portion 3al, which is obtained by a part of the bridging portion 3a being cut out, to prevent a corner portion of the bridging portion 3a of the core 3 from protruding from the outer circumference of the insulating tubular body 2, because the core 3 is attached to the insulating tubular body 2 while being inclined at ±45° relative to the axis of the detected object S. On the other hand, not making the plate thickness of the bridging portion 3a uniform is also performed to increase the volume of the core 3 as much as possible and thus secure a magnetic flux path to a large extent.

Moreover, forming the end surface 3b 1 of the leg portion 3b facing the detected object S in a curved surface shape along the inner circumferential surface of the insulating tubular body 2 also enables increasing the surface area thereof facing the detected object S as much as possible. Furthermore, in the present embodiment, the leg portion end surfaces 3b1 are formed in such an exposed manner as to face the detected object S, but do not necessarily need to be exposed, and the leg portion end surfaces 3b 1 can be covered with the insulating tubular body 2 depending on, for example, the use application of the magnetostriction type torque detection sensor.

Moreover, as illustrated in Fig. 1 and Fig. 2, each core 3 is attached to the insulating tubular body 2 in such a manner that a magnetic path which is formed at each core 3 and the detected object S is at an inclination angle of any one of ±45° to the axis O of the detected object S. With this configuration, in a case where a compressive stress acts in a direction of+45° to the axis O of the detected object S and a tensile stress acts in a direction of -45° thereto, or in a case where a tensile stress acts in a direction of+45° thereto and a compressive stress acts in a direction of -45° thereto, a change in magnetic permeability occurring in the detected object S by the above-mentioned inverse magnetostrictive effect can be detected by performing conversion from the amount of change in inductance of the detection coils 4 to a torque.

In the above-described way, although it would be normally required that a core 3 and a detection coil 4 used to detect a compressive stress in a direction of+45° relative to the axial direction of the detected object S be arranged at one insulating tubular body 2 and a core 3 and a detection coil 4 used to detect a tensile stress in a direction of -45° relative thereto be arranged at the other insulating tubular body 2 in a separate manner, arranging these cores 3 and detection coils 4 at regular intervals around a single insulating tubular body 2 enables reducing the size of the magnetostriction type torque detection sensor 1 in the axial direction thereof.

In the present embodiment, a core 3 mounted in such a manner that a magnetic path (an arrow illustrated in Fig. 1) formed at the detected object S is at an inclination angle of +45° to the axis O of the detected object S and a core 3 mounted in such a manner that the magnetic path is at an inclination angle of -45° to the axis O of the detected object S are attached alternately at regular intervals in the circumferential direction of the insulating tubular body 2. This enables detecting a change in torque in any rotational direction acting on the detected object S with a high sensitivity.

Furthermore, the core 3 mounted at an inclination angle of +45° and the core 3 mounted at an inclination angle of -45° do not necessarily need to be arranged alternately on the outer circumference of the insulating tubular body 2, but can be arranged at respective equal angles.

It is desirable that the core 3 be formed by punching a magnetic plate material such as a magnetic steel sheet into a U-shape or an E-shape, and the core 3 can also be formed by lamination-pressing these punched materials. It is favorable that the magnetic plate material is a soft magnetic material, for which, for example, a silicon steel plate or a pure iron, which is relatively high in magnetic permeability, is used. The core 3 can also be a magnetic nanowire. For example, since nanowires made of amorphous alloy (metallic glass) exist, a fiber obtained by bundling these wires can also be used. Moreover, the core 3 can also be formed into a block shape by press-molding metallic magnetic powders (for example, ferrite).

Furthermore, while a case where, as illustrated in Fig. 6 and Fig. 7, a cutout 3a1 is provided at the bridging portion 3a of the core 3 has been described, the present embodiment is not necessarily limited to this.

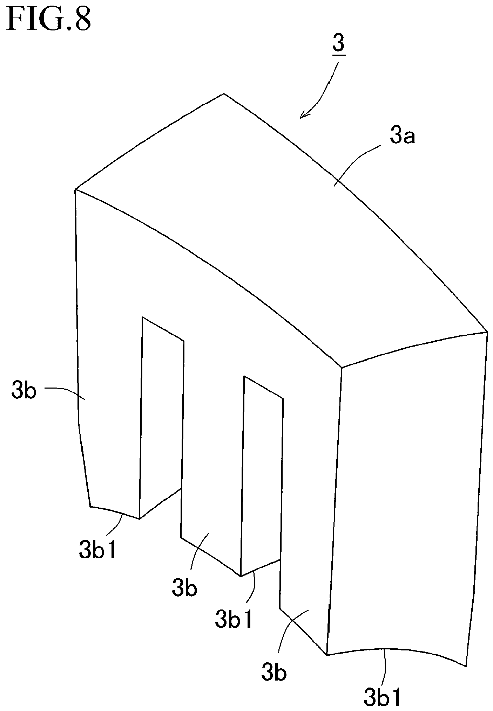

For example, as long as able to be mounted on the insulating tubular body 2, a core 3 in which all of the plate thicknesses of the bridging portion 3a and leg portions 3b configuring the core 3 are the same as illustrated in Fig. 8 can also be used. In this case, the core 3 can be any of a stacked core and a block-shaped core.

Here, the principle of detection of a torque acting on the detected object S is described. When a torque occurs at the detected object S, the magnetic permeability µ of the detected object S is changed by the inverse magnetostrictive effect, and, as a result, such a change can be measured as a change in inductance of the detection coil 4. More specifically, the inductance of the detection coil 4 is proportional to the square of the number of turns N of the detection coil 4, and is inversely proportional to a magnetic resistance Rm including a magnetic path of the core 3 and the detected object S, which are configured in such a way as to insert the detection coil 4 therebetween. The magnetic resistance Rm is inversely proportional to the cross-sectional area A of a magnetic path through which a magnetic flux flows and the relative magnetic permeability µr and is proportional to the length L of the magnetic path through which a magnetic flux flows. Moreover, increasing the amount of magnetic flux having an intended direction enables acquiring a change in magnetic permeability µ in a sensitive manner. When a compressive force is applied from the core 3, which determines the inductance of the detection coil 4, to the detected object S in the same direction as that of a magnetic flux flowing thereinto, the value of the magnetic permeability µ of the detected object S decreases, and, as a result, the inductance of the detection coil 4 decreases. Conversely, when a tensile force acts in the same direction as that of the flow of the magnetic flux, the inductance of the detection coil 4 increases.

For example, in Fig. 1, when a tensile force acts on the detected object S in a direction of +45°, the inductance of the detection coil 4 increases, and, when a compressive force acts thereon in a direction of -45°, the inductance of the detection coil 4 decreases. Such a change in inductance is detected as a change in output voltage by a phase detection method using a lock-in amplifier, and a torque acting on the detected object S is detected based on the amount of change between an output voltage value obtained when a torque is acting on the detected object S and an output voltage value obtained when no torque is acting thereon.

While the above-described magnetostriction type torque detection sensor 1 is configured such that a plurality of cores 3 each having three leg portions 3b connected to each other by a bridging portion 3a located at the outer circumferential surface side of an insulating tubular body 2 is arrayed while being inclined at a predetermined angle to the axis of a detected object S, a detection coil 4 is wound around the central leg portion 3b, and each core 3 is attached in such a manner that a plurality of leg portion end surfaces 3b1 faces the detected object S via the inner circumferential surface of the insulating tubular body 2, the present embodiment is not limited to this configuration.

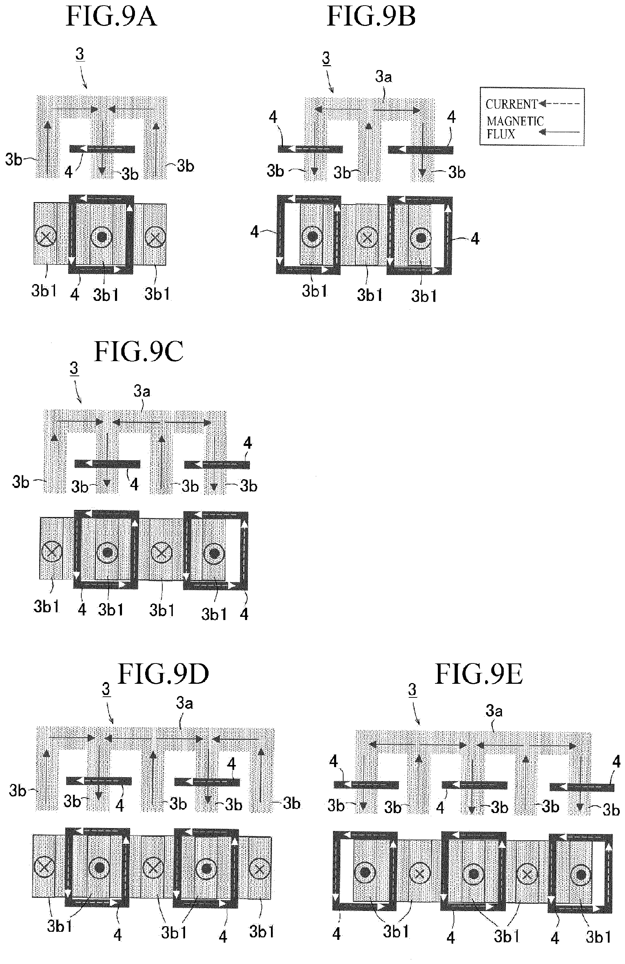

Next, Figs. 9A to 9E schematically illustrate other configurations of the magnetostriction type torque detection sensor 1. The configurations of the magnetostriction type torque detection sensor 1 are described with reference to Figs. 9A to 9E. Such description is performed focusing around configurations of the core 3 and the detection coil 4, and each of Figs. 9A to 9E represents a front view and a leg portion end view of each core 3. Moreover, each arrow overlapping the core 3 represents the direction of a magnetic flux, and each arrow overlapping the detection coil 4 represents the direction of flowing of a current.

While Fig. 9A schematically illustrates a case where the above-mentioned detection coil 4 is wound around the central leg portion 3b out of three leg portions 3b, as illustrated in Fig. 9B, the detection coil 4 can be wound around each of two-side leg portions 3b in the same direction. In this case, currents flowing through the respective detection coils 4 have the same direction, thus increasing the amount of magnetic flux to be generated at the core 3 by energization, so that the detection sensitivity for a torque acting on the detected object S is improved.

Moreover, as illustrated in Fig. 9C, the number of leg portions 3b of the core 3 is not limited to an odd number of 3 or more but can be an even number of 3 or more. Fig. 9C illustrates a configuration in which four leg portions 3b are connected to the bridging portion 3a of the core 3. The detection coil 4 is not wound around each of adjacent leg portions 3b connected to each other by the bridging portion 3a. For example, in Fig. 9C, in a case where the number of leg portions 3b connected to the bridging portion 3a of the core 3 is 4, the detection coil 4 is wound around every other leg portion 3b, i.e., two separate leg portions 3b, out of the leg portions 3b connected to the bridging portion 3a. In this case, although the detection coil 4 wound around, for example, the leg portion 3b located at the right-hand end protrudes outward, since the respective detection coils 4 are wound in the same direction, the amount of magnetic flux passing through the leg portion end surfaces 3b 1 can be increased.

Moreover, in a case where, as illustrated in Fig. 9D, five leg portions 3b are connected to the bridging portion 3a of the core 3, the detection coil 4 can be arranged at every other leg portion 3b except for the two-side leg portions 3b connected to the bridging portion 3a. In this case, any dead space which is caused by a detection coil 4 protruding outward does not occur, and a magnetic circuit which leads between the leg portion 3b with the detection coil 4 wound therearound and the leg portions 3b located at both sides thereof is formed, so that the amount of magnetic flux passing through the leg portion end surfaces 3b 1 can be increased.

In a case where, as illustrated in Fig. 9E, five leg portions 3b are connected to the bridging portion 3a of the core 3, the detection coil 4 can be wound around every other leg portion 3b including the two-side leg portions 3b, thus being provided at three places. In this case, although the detection coils 4 wound around the respective two-side leg portions 3b protrude outward, since the number of detection coils 4 is increased, the amount of magnetic flux passing through the leg portion end surfaces 3b 1 can be increased.

Here, a torque testing apparatus and test results with an evaluation sample 5 used as the detected object S are described. A test was performed with respect to a column-shaped evaluation sample 5 of 18 mm in diameter and 200 mm in length with permendur (FeCoV) used as a magnetostrictive material and chrome molybdenum steel (JIS SCM 415) used as a general structural material.

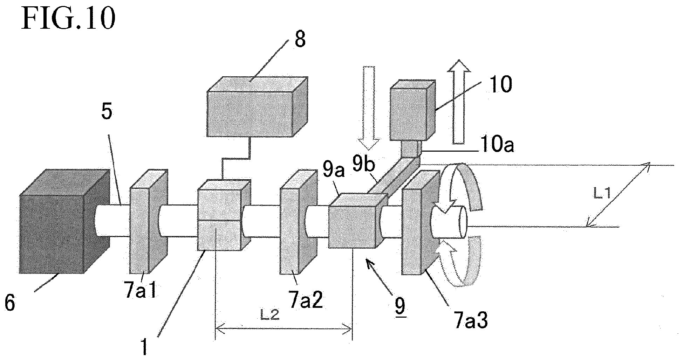

Fig. 10 is a schematic diagram of the torque testing apparatus. The evaluation sample 5 is fixed at one end portion in the longitudinal direction thereof (at the left-hand side thereof) by a rotation fixing jig 6 and is rotatably supported at a plurality of places (for example, three places) lined up toward the other end portion in the longitudinal direction thereof (toward the right-hand side thereof) by retention jigs 7a1, 7a2, and 7a3. The rotation fixing jig 6 prevents the evaluation sample 5 from rotating.

Between the retention jig 7a1 and the retention jig 7a2, the magnetostriction type torque detection sensor 1 is concentrically mounted in such a way as to cover the outer circumference of the evaluation sample 5. The magnetostriction type torque detection sensor 1 detects a torque acting on the evaluation sample 5 and transmits the detected torque to a torque-voltage converter 8, which converts the magnitude of the torque into a voltage value and outputs the voltage value.

Between the retention jig 7a2 and the retention jig 7a3, a rotation jig 9 is mounted in such a way as to be able to rotate integrally with the evaluation sample 5. The rotation jig 9 includes a jig body 9a, which is integrally mounted on the outer circumference of the evaluation sample 5, and an arm portion 9b, which is provided to extend from the jig body 9a outward in the radial direction of the evaluation sample 5. A vertical movement portion 10a of a load measuring instrument 10 is in contact with the fore-end portion of the arm portion 9b. The load measuring instrument 10 is installed in such a manner that the vertical movement portion 10a pushes upward and pushes downward the arm portion 9b, and measures a load applied to the arm portion 9b at that time with a load detection unit such as a load cell.

With regard to a torque testing method, applying a predetermined load to the arm portion 9b with the vertical movement portion 10a of the load measuring instrument 10 caused a torque in a clockwise direction (CW direction) or counterclockwise direction (CCW direction) to be generated at the evaluation sample 5 via the jig body 9a. The magnitude of the torque generated at the evaluation sample 5 is calculated with a value obtained by multiplying a load value applied by the load measuring instrument 10 by the length L1 of the arm portion 9b. In the test, the length L1 was set to such a value as "L1 = 150 mm". As a distance L2 from the rotation jig 9 to the magnetostriction type torque detection sensor 1 is longer, the amount of torsion of the evaluation sample 5 becomes larger and, therefore, torque measurement becomes easier. In the test, the distance L2 was set to "L2 = 100 mm".

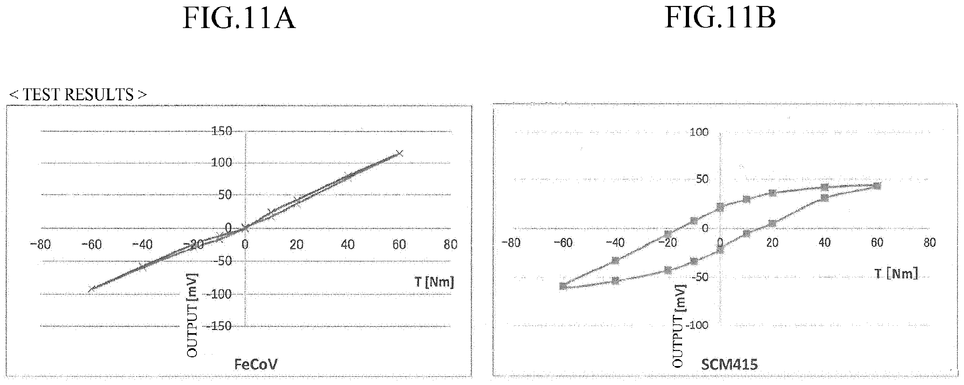

Measurement was performed while a load was varied to be increased and decreased by the load measuring instrument 10 in such a manner that the torque applied to the evaluation sample 5 became 0 newton-meter (Nm) → 10 Nm → 20 Nm → 40 Nm → 60 Nm → 40 Nm → 20 Nm → 10 Nm → 0 Nm. Moreover, measurement was performed while the rotational direction of the evaluation sample 5 was changed between the clockwise direction (CW direction) and the counterclockwise direction (CCW direction). A relationship between the torque applied to the evaluation sample 5 and the sensor output voltage is illustrated in the graph charts of Figs. 11A and 11B.

Fig. 11A is a graph chart with permendur (FeCoV) used as the evaluation sample 5, and Fig. 11B is a graph chart with chrome molybdenum steel (JIS SCM 415) used as the evaluation sample 5. The horizontal axis indicates the magnitude of a torque applied to the evaluation sample 5, and the vertical axis indicates a voltage value output from the torque-voltage converter 8 by converting a torque detected by the magnetostriction type torque detection sensor 1 into a voltage. In each of the graph charts, the first quadrant and the fourth quadrant represent experimental data obtained in a case where a rotation torque in the clockwise direction (CW direction) was generated on the evaluation sample 5 (a case where a load was applied downward), and the second quadrant and the third quadrant represent experimental data obtained in a case where a rotation torque in the counterclockwise direction (CCW direction) was generated on the evaluation sample 5 (a case where a load was applied upward) (see Fig. 10).

Using the magnetostriction type torque detection sensor 1 described in the present embodiment revealed that, even not only in a case where the evaluation sample 5 was permendur (FeCoV) serving as a magnetostrictive material but also in a case where the evaluation sample 5 was chrome molybdenum steel (JIS SCM 415) serving as a general structural material, although hysteresis characteristics became somewhat large, a torque was able to be measured in any case.

As described above, according to the use of the above-described magnetostriction type torque detection sensor, since a plurality of cores 3 having at least three or more leg portions 3b connected to each other by a bridging portion 3a located at the outer circumferential surface side of an insulating tubular body 2 is arrayed while being inclined at a predetermined angle to the axis of a detected object S and is attached in such a manner that a plurality of leg portion end surfaces 3b1 face the detected object S via the inner circumferential surface of the insulating tubular body 2, the surface area of each core 3 facing the detected object S can be increased. Moreover, since three or more leg portions 3b are connected to each other by a bridging portion 3a located at the outer circumferential surface side of the insulating tubular body 2, the volume of each core 3 expands toward outward in a radial direction thereof, so that a wide magnetic flux path can be attained.

Since the above-mentioned configuration enables increasing the absolute amount of a magnetic flux which is effective for detection of a torque, the detection sensitivity for a torque acting on the detected object S is improved.

While, in the above-described embodiment, cores 3 are arranged at regular intervals at inclination angles of +45° and -45° on a single insulating tubular body 2 which is mounted around a detected object S, a pair of insulating tubular bodies 2 in which cores 3 arranged at any one of the inclination angles are arranged at regular intervals on each insulating tubular body 2 can be provided.

Moreover, the insulating tubular body 2 and the cores 3 can be integrally attached by insert molding.

## Claims

1. A magnetostriction type torque detection sensor (1) comprising:
an insulating tubular body (2) concentrically attached in such a way as to cover an outer circumference of a detected object (S);
a plurality of cores (3) having at least three or more leg portions (3b) connected to each other by a bridging portion (3a) located at an outer circumferential surface side of the insulating tubular body (2); and
a detection coil (4) wound around any of the leg portions (3b) of each of the plurality of cores (3) without adjoining each other,
wherein the plurality of cores (3) is arrayed while being inclined at a predetermined angle to an axis (O) of the detected object (S) and is attached in such a manner that end surfaces (3b1) of the leg portions (3b) face the detected object (S) via an inner circumferential surface of the insulating tubular body (2).

2. The magnetostriction type torque detection sensor (1) according to claim 1, wherein a plurality of detection coils (4) each corresponding to the detection coil (4) is respectively provided at a plurality of leg portions (3b), and directions of currents which flow through the respective detection coils (4) are the same.

3. The magnetostriction type torque detection sensor (1) according to claim 1 or 2, wherein the number of the leg portions (3b) is an odd number or even number of 3 or more, and the detection coil (4) is wound around every other leg portion (3b) out of a plurality of leg portions (3b) connected to each other by the bridging portion (3a).

4. The magnetostriction type torque detection sensor (1) according to any one of claims 1 to 3, wherein the plurality of cores (3) is attached at regular intervals in an axial direction or rotational direction of the insulating tubular body (2) in such a manner that a magnetic path which is formed at the plurality of cores (3) and the detected object (S) is at an inclination angle of any one of ±45° to the axis (O) of the detected object (S).

5. The magnetostriction type torque detection sensor (1) according to any one of claims 1 to 4, wherein a plurality of cores (3) having inclination angles of ±45° to the axis (O) of the detected object (S) is attached to a single insulating tubular body (2) at regular intervals in a circumferential direction.
